# EUROPÄISCHE PATENTSCHRIFT

(11) **EP 2 435 509 B1**
(45) Veröffentlichungstag und Bekanntmachung des Hinweises auf die Patenterteilung: **21.11.2018**
(21) Anmeldenummer: 10725065.6
(22) Anmeldetag: 20.05.2010
(51) Int. Cl.: C08K 3/04

(54) **POLYOLEFINZUSAMMENSETZUNG**
POLYOLEFIN COMPOSITION
COMPOSITION DE POLYOLÉFINE

(30) Priorität: 25.05.2009 CH 803092009
(43) Veröffentlichungstag der Anmeldung: 04.04.2012
(73) Patentinhaber: Georg Fischer Rohrleitungssysteme AG, 8201 Schaffhausen (CH)
(72) Erfinder: SCHÜSSLER, Stephan, 35094 Caldern (DE); LENDL, Michaela, CH-8203 Schaffhausen (CH); KRETZSCHMAR, Bernd, 01445 Radebeul (DE)
(74) Vertreter: Fenner, Seraina
(86) Internationale Anmeldenummer: PCT/EP2010/056932
(87) Internationale Veröffentlichungsnummer: WO 2010/136370

(56) Entgegenhaltungen:
- EP-A1- 1 349 179
- EP-A1- 2 028 218

## Beschreibung

Die Erfindung betrifft eine Polymerzusammensetzung mit einem gegenüber der reinen Polymermatrix erhöhten E-Modul bei einer gleichzeitig erhöhten Wärmeformbeständigkeit, Kerbschlagzähigkeit, Erhalt bzw. Verbesserung des Profils der chemischen Beständigkeit sowie einer Absenkung der Kriechneigung, wobei die Polymerzusammensetzung als Füllstoff ein Kohlenstoffmaterial enthält, wobei der Füllstoff als Nano-Füllstoff, insbesondere als Kohlenstoff-Nanofaser vorliegt und dass die Polymerzusammensetzung einen Schmelzindex von weniger als 2g / 10 min gemäss der Methode 190/5 nach ISO 1133 aufweist.

Im Rohrleitungsbau werden Rohrleitungen aus Polyolefinen und Polyolefinzusammensetzungen eingesetzt. Für die häufigsten Anwendungsgebiete sind genügend Polyethylen-, Polypropylen- Polybutylen- und Polyvinylchlorid-Zusammensetzungen am Markt vorhanden. Verbesserte Werkstoffe mit einem höheren E-Modul und einer gleichzeitig erhöhten Wärmeformbeständigkeit, die in speziellen Anwendungsbereichen wie der Transport von aggressiven Medien einsetzbar sind, sind gegen bezahlbare Preise nicht erhältlich. Die Schwerpunkte der Entwicklung von neuen Kunststoffzusammensetzungen liegen in den Bereichen Coextrusion, Funktionsbeschichtung, Verstreckung und Duroplast-Faserverbunde. In den Entwicklungsprogrammen der Rohstoffhersteller werden bezahlbare Kunststoffzusammensetzungen, die sich für die Extrusion von Rohrleitungen eignen, nicht vorrangig berücksichtigt.

Die Verbesserung der Eigenschaftsprofile der im Kunststoffrohrleitungsbau verwendeten Rohstoffe ist in den letzten Jahren nicht mehr deutlich fortgeschritten. Innovationen bewegen sich nach unserer Kenntnis vorrangig im Bereich der Veredelungen durch Coextrusion, Funktionsbeschichtung, biaxiale Verstreckung oder Verstärkung durch Duroplast/Faserverbunde.

Im Segment der Industrierohre haben die namhaften Hersteller bei den Polyolefinen (PE, PP, PB) bereits auch Rohstoffseitig ein vergleichbares hohes Qualitätsniveau erreicht, sodass sich die Marktbewerbung zunehmend auf eine reine Preisargumentation reduziert. Im Bereich PVC-Werkstoffe ist in vielen Anwendungen eine ähnliche Entwicklung sichtbar.

Im Segment der Kunststoff-Industrierohre ist der Wunsch der Verarbeiter nach signifikanten - aber auch bezahlbaren - Werkstoffverbesserungen bekannt. Er findet aber durch die vergleichsweise geringe Größe dieses Segmentes von Seiten der Rohstoff-Hersteller seit einigen Jahren keine ausreichende Priorität.

Bekannte Systeme sind die Verstärkung von Kunststoffen durch Füllstoffe → C-Füllstoffe → C-basierende Nanofüllstoffe, veröffentlicht in der US 2006 0001013A1, der WO 2008/041965 A2 oder der WO 2009 / 000408 A1.

Weiterhin ist die Dispersionsproblematik von C-basierenden Füllstoffen und Nanofüllstoffen in der WO 2009 / 000408 A1 beschrieben.

Nur eine homogene Verteilung ermöglicht die Entfaltung der Eigenschaften der Nanofüllstoffe; Aussage ist unabhängig von Natur der Nanofüllstoffe.

Die Dispergierbarkeit eines Nanofüllstoffes hängt u.a. von Größe, Oberflächenstruktur, gewählter Matrix, deren Molekulargewicht / Schmelzeviskosität und der gewählten Compoundiermethode (Maschinenzusammenstellung, Anzahl Stufen, etc.) ab. Weiterhin können systemspezifische Verträglichkeitszusätze eingesetzt werden, wie in US 7 479 516 B2 oder WO 29027357A1 beschrieben.

Die Systemverträglichkeiten von Nano-Füllstoffen mit einem gewählten Polymer sind i.d.R. nicht einfach auf andere Polymerklassen übertragbar, sondern verlangen nach individueller Anpassung. Allein schon die Absenkung der Schmelzeviskosität der Polymere von typischen Spritzgussqualitäten hin zu Extrusionsqualitäten wirft bei der Dispersion von Nanofüllstoffen völlig neue Fragen auf.

Bisher in Patentliteratur beschriebene Dispergierwege für CNT/CNF sind: WO 29027357 A1, US 2009 0008 611, WO 2006096203 A2, EP 2028218 A1, US 2006 001013 A1 und WO 2008041965 A2.

Der grundsätzliche Vorteil von CNT/CNF verstärkten Polymeren ist theoretisch in der Literatur bekannt (gute Energietransporteigenschaften, verbesserte Mechanik, mit gegenüber konventioneller Russfüllung niedrigeren Füllgraden).

Die Auswirkungen einer Verstärkung von Polymermatrices durch C-basierende Nanofüllstoffe auf das chem. Beständigkeitsprofil des Werkstoffes sind bislang nicht in der Literatur beschrieben.

Grundsätzliche Attraktivität des Carbonnano Füllstoff-Ansatzes für Polymere für den industriellen Anlagenbau/Rohrleitungsbau. Erwartungen:
- Klar definiertes chemisches Beständigkeitsprofil, solange Füllstoffe nicht chemisch Oberflächen-modifiziert sind, oder Compatibilizer verwendet werden.
- Erwartete deutliche Steigerung von Steifigkeit, Festigkeit und Zähigkeit.
- Synergie durch Integration von verbesserten Energietransporteigenschaften.
- Verbesserung des Preis-/Leistungsverhältnisses der Produkte.
- Verbesserung der Druckrohreigenschaften des Kriechverhaltens.
- Erhalt oder Verbesserung der Barriereeigenschaften gegenüber Chemikalien.

### Das Ziel der Erfindung ist

- die Herstellung eines CN-Füllstoffcomposites auf Basis eines hochschmelzviskosen Polymers (Polyolefin), das im industr. Rohrleitungsbau etabliert ist (MFR-Klasse < 2g/10 min,. ISO 1133, Verfahren 190/5). Sicherstellen einer homogenen Füllstoffverteilung.
- die Verwendung von nicht-modifizierten, kommerziellen Carbon-Nano Füllstoffen einer konventionellen Compoundiertechnik, sowie Verzicht auf Compatibilizer.
- die Definition eines geeigneten Füllstoffs. Festlegung idealer Füllstoffmengen.
- die deutliche Verbesserung der rohrrelevanten Materialeigenschaften (thermisch, mechanisch, Energietransport) gegenüber dem reinen Matrixmaterial, insbesondere Erhöhung der Wärmeleitfähigkeit.
- der Erhalt, bzw. Verbesserung des chem. Beständigkeitsverhaltens des neuen Werkstoffes.
- die Entwicklung einer einzigen Werkstoffrezeptur mit Potenzial zur Fertigung sämtlicher Rohrleitungssystemkomponenten (Rohr, Formteile, Platten, Vollstäbe, Schweißdraht).

Die wesentlichen Herausforderungen der Erfindung sind der Erhalt oder die Verbesserung der Druckbeständigkeit (sog. MRS-Klasse), die Signifikante (möglichst > 30%) Erhöhung von Steifigkeit und Schlagzähigkeit (bes. bei PP), der Wärmeleitfähigkeit, der Erhalt der relativen Verbesserung bei Erhöhung der Einsatztemperatur, die Verbesserung der Chemikalienbeständigkeit und der zusätzliche Nutzen, beispielsweise die Verringerung der thermischen Ausdehnung und/oder die Verbesserung der Energie-Transporteigenschaften.

Aus der EP 2 028 218 A1 ist eine Polymerzusammensetzung bekannt, die neben Polyolefine und Polyhydroxycarboxylsäure als Copolymer noch Kohlenstoff-Nanoröhrchen enthält. Die Polymerzusammensetzung kann beispielsweise eingesetzt werden in Wärmeaustauscher, wo eine gute Wärmeleitfähigkeit verlangt wird. Auch die elektrische Leitfähigkeit kann verbessert werden. Weil die Kohlenstoff-Nanoröhrchen zur Agglomeration neigen, ist eine homogene Mischung der neuen Zusammensetzung schwierig zu erreichen. Als Folge hiervon sind mechanische Schwachstellen im Endprodukt nicht auszuschliessen. Zur Herstellung der Polymermatrix wird ein Metallocen-Katalysator verwendet. Die Schmelzviskosität oder MFI (melt flow index) der Polymerzusammensetzung ist dermassen ungünstig, dass Rohre oder Kunststofformteile im Spritzgussverfahren nicht wirtschaftlich hergestellt werden können.

Ausgehend von diesem Stand der Technik ist es Aufgabe der Erfindung, eine Polymerzusammensetzung anzugeben, die einfach herstellbar ist und bei möglichst tiefen Herstellungskosten möglichst gute mechanische Eigenschaften aufweist, und die im Spritzgussverfahren verarbeitet werden können. Hiermit wird erreicht, dass auch ein für aggressive Medien geeignetes Kunststoffmaterial angeboten werden kann.

Diese Aufgabe wird dadurch gelöst, dass der Füllstoff nicht chemisch Oberflächen-modifiziert ist oder ohne Compatibilizer verendet wird.

Die Polymerzusammensetzung kann ein Polyolefin mit einem Schmelzindex von weniger als 2g/10min gemäss der Methode 190/5 nach ISO 1133 sein.

Bevorzugte Weiterbildungen der Erfindung ergeben sich aus den abhängigen Ansprüchen.

Es folgt die Beschreibung der einzelnen Komponenten:
Polymerbasis: Hostalen, PPH 2222 grau; MFR (190/5): 0,5g/10 min.

### Nanofüllstoffe:

CNT: Nanocyl 7000; Nanocyl SA.; MWCNT; keine Angaben zur Geometrie; 90 % C-Anteil; 10% Metalloxid-Gehalt; 250 - 300 g/ m² Oberfläche
CNF: VGCF-H; Showa Denko, Durchmesser: 150 nm; Länge = 10-20 µm;
Aspektverhältnis ∼ 100; 13 m² / g Oberfläche; keine Informationen zur Reinheit

| | |
|---|---|
| Konzentrationsverhältnisse: | CNT: 1, 2, 5 und 10 Gew. % |
| | CNF: 5/10 Gew. % |

### a) Compoundierprozess:

Zur besseren Dispergierung der MWNT sowie zur Einhaltung der erforderlichen Genauigkeit der geringen Anteile in den Formulierungen wurde ein Masterbatch (90% Hostalen PP H2222 + 10% MWNT Nanocyl 7000) compoundiert, das in nachfolgenden Extrusionsschritten zur gewünschten Zusammensetzung der Formulierungen verdünnt wurde.

Zur Compoundierung des Masterbatches wurde ein dichtkämmender gleichlaufender Labor-Doppelschneckenextruder eingesetzt.

Das hier vorgestellte System beschreibt also erstmalig die Möglichkeit, mit kommerziell verfügbaren CNF und einer State of the Art-Compoundiertechnik unter Verwendung eines im industriellen Anlagenbau etablierten hochviskosen Polyolefin-Materials einen neuen Composit-Werkstoff zu erzeugen, der sich durch folgende Eigenschaften auszeichnet:
- Erhöhung der Steifigkeit um > 40%
- Erhöhung der Festigkeit um > 7%
- Erhöhung der Kerbschlagzähigkeit um 50%
- Erhöhung der Wärmeformbeständigkeit um < 27%
- Erreichen einer Volumenleitfähigkeit von 7,5 * 104 * Ω * cm
- Erhalt der Kristallinität und Oxidationsstabilität
- Verbesserung der therm. Leitfähigkeit
- Absenkung der therm. Ausdehnung um 20%
- Verbesserung des chem. Beständigkeitsprofils

## Patentansprüche

1. Polymerzusammensetzung mit einem gegenüber der reinen Polymermatrix erhöhten E-Modul bei einer gleichzeitig erhöhten Wärmeformbeständigkeit, wobei die Polymerzusammensetzung als Füllstoff ein Kohlenstoffmaterial enthält, wobei der Füllstoff als Nano-Füllstoff, insbesondere als Kohlenstoff-Nanofaser vorliegt und dass die Polymerzusammensetzung einen Schmelzindex von weniger als 2g / 10 min gemäss der Methode 190/5 nach ISO 1133 aufweist, **dadurch gekennzeichnet, dass** der Füllstoff nicht chemisch Oberflächen-modifiziert ist oder ohne Compatibilizer verendet wird.

2. Polymerzusammensetzung nach Anspruch 1, **dadurch gekennzeichnet, dass** das Polymer ein hochdichtes Polyethylen ist.

3. Polymerzusammensetzung nach mindestens einem der Ansprüche 1 oder 2, **dadurch gekennzeichnet, dass** das Polymer ein vernetztes Polyethylen ist.

4. Polymerzusammensetzung nach Anspruch 1, **dadurch gekennzeichnet, dass** das Polymer ein Polypropylen ist.

5. Polymerzusammensetzung nach mindestens einem der Ansprüche 1 bis 4, **dadurch gekennzeichnet, dass** der Kohlenstoff-Nanofaser-Füllstoff einen Gewichtsanteil von weniger als 30 Gew % aufweist.

6. Verfahren zur Herstellung einer Polymerzusammensetzung nach mindestens einem der vorhergehenden Ansprüche, **dadurch gekennzeichnet, dass** der Füllstoff durch Direktcompoundieren oder Masterbatch in der reinen Polymermatrix eingebracht wird, wobei das Comboundieren ohne Verträglichkeitsvermittler (Compatibilizer) durchgeführt wird.

7. Verwendung einer Polymerzusammensetzung nach mindestens einem der vorhergehenden Ansprüche 1 bis 5, **dadurch gekennzeichnet, dass** die Polymerzusammensetzung im industriellen Rohrleitungs- oder Anlagenbau zum Transport von aggressiven gasförmigen oder flüssigen Medien eingesetzt wird.

8. Verwendung einer Polymerzusammensetzung nach mindestens einem der vorhergehenden Ansprüche 1 bis 5, **dadurch gekennzeichnet, dass** die Polymerzusammensetzung mittels Extrusion zu Rohren, Platten, Stäben oder durch Spritzguss zu Spritzgussformteilen verarbeitet wird.

9. Verwendung einer Polymerzusammensetzung nach mindestens einem der vorhergehenden Ansprüche 1 bis 5, **dadurch gekennzeichnet, dass** die Polymerzusammensetzung mit konventionellen Additiven zur Erhöhung der thermischen Leitfähigkeit kombiniert wird, beispielsweise Metallpulver, Graphit, anorganische Keramiken.

10. Verwendung einer Polymerzusammensetzung nach mindestens einem der vorhergehenden Ansprüche 1 bis 5, **dadurch gekennzeichnet, dass** die so erhaltenen Polymerzusammensetzung in Wärmetauschern (chemischer Apparatebau, Solartechnik, Geothermie) eingesetzt wird.

## Claims

1. Polymer composition having an elevated elastic modulus compared to the pure polymer matrix coupled with an elevated heat distortion resistance, wherein the polymer composition contains as a filler a carbon material, wherein the filler is in the form of a nanofiller, in particular in the form of a carbon nanofiber, and that the polymer composition has a melt index of less than 2 g/10 min according to method 190/5 according to ISO 1133, **characterized in that** the filler is not chemically surface modified or is used without compatibilizer.

2. Polymer composition according to Claim 1, **characterized in that** the polymer is a high-density polyethylene.

3. Polymer composition according to at least one of Claims 1 or 2, **characterized in that** the polymer is a crosslinked polyethylene.

4. Polymer composition according to Claim 1, **characterized in that** the polymer is a polypropylene.

5. Polymer composition according to at least one of Claims 1 to 4, **characterized in that** the carbon nanofiber filler has a weight fraction of less than 30% by weight.

6. Process for producing a polymer composition according to at least one of the preceding claims, **characterized in that** the filler is introduced into the pure polymer matrix via direct compounding or masterbatch, wherein the compounding is performed without compatibilizer.

7. Use of a polymer composition according to at least one of the preceding Claims 1 to 5, **characterized in that** the polymer composition is employed in industrial pipeline or plant construction for transport of aggressive gaseous or liquid media.

8. Use of a polymer composition according to at least one of the preceding Claims 1 to 5, **characterized in that** the polymer composition is processed by means of extrusion into pipes, sheets, rods, or, by injection moulding, into injection-moulded parts.

9. Use of a polymer composition according to at least one of the preceding Claims 1 to 5, **characterized in that** the polymer composition is combined with conventional additives to increase thermal conductivity, for example metal powder, graphite, inorganic ceramics.

10. Use of a polymer composition according to at least one of the preceding Claims 1 to 5, **characterized in that** the thus obtained polymer composition is employed in heat exchangers (chemical apparatus construction, solar technology, geothermics).

## Revendications

1. Composition polymère ayant un module E élevé en comparaison de la matrice polymère pure avec simultanément une stabilité dimensionnelle à la chaleur élevée, la composition polymère contenant en tant que charge un matériau carboné, la charge se présentant sous la forme d'une nano-charge, notamment sous la forme de nano-fibres de carbone, et la composition polymère présentant un indice de fusion inférieur à 2 g/10 minutes selon la méthode 190/5 selon ISO 1133, **caractérisée en ce que** la charge n'est pas modifiée chimiquement en surface ou est utilisée sans compatibilisateur.

2. Composition polymère selon la revendication 1, **caractérisée en ce que** le polymère est un polyéthylène haute densité.

3. Composition polymère selon au moins l'une quelconque des revendications 1 ou 2, **caractérisée en ce que** le polymère est un polyéthylène réticulé.

4. Composition polymère selon la revendication 1, **caractérisée en ce que** le polymère est un polypropylène.

5. Composition polymère selon au moins l'une quelconque des revendications 1 à 4, **caractérisée en ce que** la charge de nano-fibres de carbone présente une proportion en poids de moins de 30 % en poids.

6. Procédé de fabrication d'une composition polymère selon au moins l'une quelconque des revendications précédentes, **caractérisé en ce que** la charge est introduite dans la matrice polymère pure par mélange direct ou sous la forme d'un mélange maître, le mélange étant réalisé sans promoteur de compatibilité (compatibilisateur).

7. Utilisation d'une composition polymère selon au moins l'une quelconque des revendications 1 à 5 précédentes, **caractérisée en ce que** la composition polymère est utilisée dans la construction de canalisations ou d'installations industrielles pour le transport de matériaux gazeux ou liquides agressifs.

8. Utilisation d'une composition polymère selon au moins l'une quelconque des revendications 1 à 5 précédentes, **caractérisée en ce que** la composition polymère est transformée par extrusion en tubes, plaques, barres ou par moulage par injection en pièces moulées par moulage par injection.

9. Utilisation d'une composition polymère selon au moins l'une quelconque des revendications 1 à 5 précédentes, **caractérisée en ce que** la composition polymère est combinée avec des additifs classiques pour l'augmentation de la conductivité thermique, par exemple une poudre métallique, du graphite, des céramiques inorganiques.

10. Utilisation d'une composition polymère selon au moins l'une quelconque des revendications 1 à 5 précédentes, **caractérisée en ce que** la composition polymère ainsi obtenue est utilisée dans des échangeurs de chaleur (fabrication d'équipements chimiques, technologie solaire, géothermie).
